# EUROPÄISCHE PATENTANMELDUNG

(11) **EP 0 898 160 A1**
(43) Veröffentlichungstag der Anmeldung: **24.02.1999**
(21) Anmeldenummer: 98113553.6
(22) Anmeldetag: 21.07.1998
(51) Int. Cl.: G01N 1/20, F16K 27/02

(54) **Probenahmeventil**

(30) Priorität: 16.08.1997 DE 19735586
(71) Anmelder: Email-Cover R. Scholz GmbH, 53919 Weilerswist (DE)
(72) Erfinder: Scholz, Robert, 53919 Weilerswist (DE)

(57) **Zusammenfassung**

Die vorliegende Erfindung betrifft ein Probenahmeventil aus Stahl mit einem Überzug von Email in säurefester Ausführung. Dabei weist der Ventilkörper 1 aus Stahl mit einem Überzug von Email einen Probeauslaufkanal 10 zur Entnahme der Probe auf. Der Probeauslaufkanal 10 ist durch einen Ventilschaft 7 aus Stahl mit einem Überzug von Email verschließbar. Zur Entnahme einer Probe kann der Ventilschaft 7 mit Hilfe einer Handbetätigung 9 geöffnet werden. Der Ventilkörper 1 ist mit einem Ventilaufsatz 2 und einem Probenahmeauslauf 3 versehen.

## Beschreibung

Die vorliegende Erfindung betrifft ein Probenahmeventil aus Stahl mit einem Überzug von Email in säurefester Ausführung. Bei Produktionsprozessen, in denen saure Stoffe hergestellt werden, müssen die Qualitäten der Stoffe überwacht werden, das geschieht dadurch, daß Proben dieser Stoffe aus dem Prozeß entnommen und auf ihre Zusammensetzung hin untersucht werden. Die Proben zieht man mit speziellen Ventilen; diese Ventile sind in den Prozeßablauf eingebaut und werden nach Bedarf nach außen geöffnet, so daß die Stoffprobe durch Auslaufen in ein Probenahmegefäß gelangt.

Verständlicherweise sind solche Probenahmeventile spezielle Konstruktiv nen, sie müssen dem Stoff angepaßt sein und z.B. dessen Viskosität, Druck und Temperatur berücksichtigen, aber insbesondere auch die chemische Zusammensetzung des Stoffes, die sich in Eigenschaften, wie Aggressivität, oxidierende Wirkung etc. äußert.

In der Praxis stellt man fest, daß auf dem weit gespannten Gebiet der Werkstoffe, bezogen auf den chemischen Angriff bzw. die Beständigkeit von Werkstoffen bei chemisch angreifenden Stoffen, keine in der Breite einsetzbare Probenahmeventile auf dem Markt dem Produzenten für seine Produktionsprozesse zur Verfügung stehen.

So gibt es Ventile in vielfältiger Bauart mit den verschiedensten Werkstoffen wie emaillierte Ventile, ausgekleidete PTFE Ventile, gummierte Ventile oder mit Tantal ausgeschlagene Ventile. Dennoch ist ein Probenahmeventil, das für saure Stoffe die Vorzüge eines Stahl-Email-Ventiles in Verbindung von gleichwertigen Adaptern zur Entnahme der Stoffproben, nicht zu finden. Offensichtlich ist der Vorteil eines Stahlkörpers der mit einem Überzug von Email versehen ist, im Anwendungsfall, als ausgestaltetes Probenahmeventil, bisher übersehen.

Die Erfindung bezieht sich auf ein Probenahmeventil aus Stahl mit einem Überzug von Email in säurefester Ausführung, das für alle sauren oder säurebildenden Verfahren eingesetzt werden kann, ausgenommen glasabtragende Stoffe, beispielsweise Fluor.

Das Probenahmeventil für den Einsatz im Säurebereich ist dadurch gekennzeichnet, daß der Ventilkörper aus Stahl ist, dieser als statisch tragendes Teil mit einem Überzug von Email, den vor Angriff der Säure schützende Werkstoff, versehen ist; und die weiteren zum Auslauf der Stoffprobe ergänzten Teile mit gleichartigem oder adäquaten anderen säurefesten Werkstoffen versehen sind.

Das Probenahmeventil besteht aus mehreren Bauteilen, die jeweils zum sauren Stoff hin mit einem Überzug von Email oder vergleichbar beständigem Metall, Kunststoff oder Keramik geschützt sind.

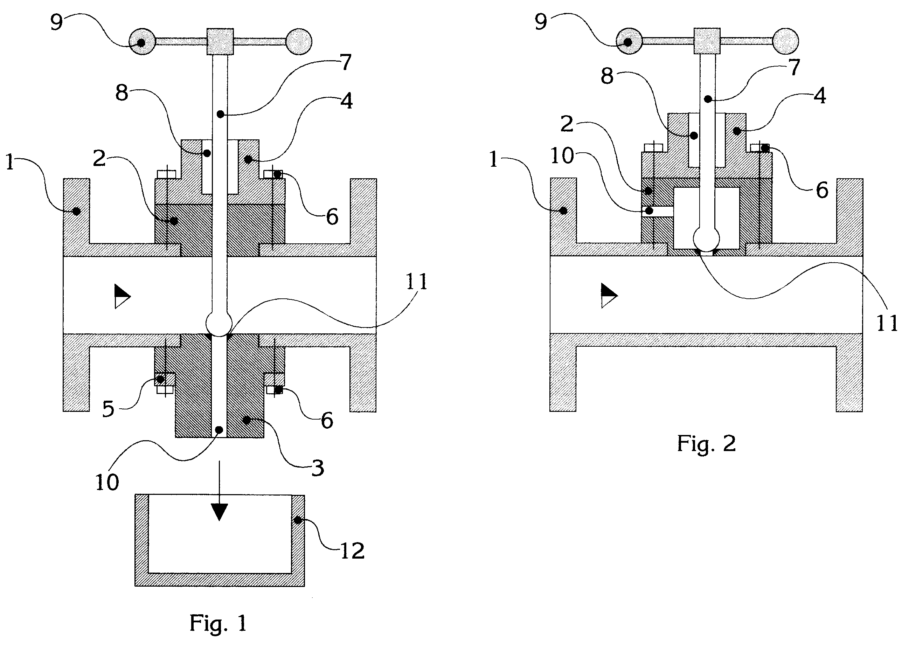

Nach Fig.1 besteht das Probenahmeventil aus dem Ventilkörper 1 in der Ausführung Stahl mit einem Überzug von Email als stofführendes und statisch tragendes Bauteil. Zur Entnahme der Stoffprobe sind eingeflanscht der Ventilaufsatz 2 und der Probenahmeauslauf 3, beide ebenfalls in Stahl mit einem Überzug von Email. Die Bauteile 2 und 3 können aber bei anderweitigen Bedarf in alternativen Werkstoffen, die gleichfalls als Einbauteile dem Ventilkörper 1 eingefügt werden können, in Stahl mit Tantalverkleidung, in PTFE mit Glasfaserfüllung oder in Keramik ausgeführt werden.

Zur Bedienung des Öffnens oder Schließens des Ventils dient die Buchse 4, in der die Gewindebuchse 8 befestigt ist, dieses mit den Schrauben 6. Die Teile 4, 8 und 6 bestehen aus einfachem Metall, da sie nicht mit dem sauren Stoff in Berührung kommen. Darin bewegt wird mit Handbetätigung 9 ein Ventilschaft 7, der als Auf-/Zu- Organ die Entnahme der Stoffprobe über den Probeauslaufkanal 10 ermöglicht, wofür das Probenahmegefäß 12 zur Verfügung steht. Der Ventilschaft 7 ergänzt sich mit der Dichtung 11, hinsichtlich des Verschließens des Probeauslaufkanals 10, damit der Ventilkörper 1 bei Nicht-Probeentnahme dicht geschlossen bleibt. Als auch inneres Bauteil, ist der Ventilschaft 7 mit einem säurefesten Überzug von Email ausgeführt, kann aber ebenfalls alternative Werkstoffe aufweisen; bei Sonderbedarf, Werkstoffe die da sind, Stahl mit Tantalverkleidung, Stahl mit PTFE-Verkleidung, Keramik, Chrom/Nickel-Stahl.

Nach Fig.2 ist bei gleicher Funktionalität das Probenahmeventil so gestaltet, daß sich der Probenauslaufkanal 10 auf der gleichen Seite des Ventilkörpers 1 befindet wie die Bedienung des Öffnens oder Schließens in Form der Bauteile 2, 4, 6, 7, 8 und 9. Damit wird vermieden, daß der Ventilschaft 7 permanent im Strömungsbereich des sauren Stoffstromes steht. In diesem Falle entfallen die Bauteile 3, 5, und teilweise 6; diese sind in vorgenannten Bauteilen integriert.

## Patentansprüche

1. Probenahmeventil aus Stahl mit einem Überzug von Email in säurefester Ausführung, dadurch gekennzeichnet, daß der Ventilkörper 1 aus Stahl mit einem Überzug von Email einen Probeauslaufkanal 10 zur Entnahme der Stoffprobe aufweist, der mit einem Ventilschaft 7 in Stahl mit einem Überzug von Email verschlossen ist und zur Entnahme der Stoffprobe mit der Handbetätigung 9 geöffnet wird.

2. Probenahmeventil nach Anspruch 1, dadurch gekennzeichnet, daß der Ventilkörper 1 mit einem Ventilaufsatz 2 aus Stahl mit einem Überzug von Email versehen ist.

3. Probenahmeventil nach Anspruch 1, dadurch gekennzeichnet, daß der Ventilkörper 1 mit einem Ventilaufsatz 2 aus Stahl mit Tantalverkleidung versehen ist.

4. Probenahmeventil nach Anspruch 1, dadurch gekennzeichnet, daß der Ventilkörper 1 mit einem Ventilaufsatz 2 aus PTFE mit Glasfaserfüllung versehen ist.

5. Probenahmeventil nach Anspruch 1, dadurch gekennzeichnet, daß der Ventilkörper 1 mit einem Probenahmeauslauf 3 aus Stahl mit einem Überzug von Email versehen ist.

6. Probenahmeventil nach Anspruch 1, dadurch gekennzeichnet, daß der Ventilkörper 1 mit einem Probenahmeauslauf 3 aus Stahl mit Tantalverkleidung versehen ist.

7. Probenahmeventil nach Anspruch 1, dadurch gekennzeichnet, daß der Ventilkörper 1 mit einem Probenahmeauslauf 3 aus PTFE mit Glasfaserfüllung versehen ist.

8. Probenahmeventil nach Anspruch 1, dadurch gekennzeichnet, daß der Ventilkörper 1 mit einem Ventilschaft 7 aus Stahl mit Tantalverkleidung versehen ist.

9. Probenahmeventil nach Anspruch 1, dadurch gekennzeichnet, daß der Ventilkörper 1 mit einem Ventilschaft 7 aus Stahl mit PTFE-Verkleidung versehen ist.

10. Probenahmeventil nach Anspruch 1, dadurch gekennzeichnet, daß der Ventilkörper 1 mit einem Ventilschaft 7 aus Chrom/Nickel-Stahl versehen ist.
